# EUROPEAN PATENT SPECIFICATION

(11) **EP 2 796 283 B1**
(45) Date of publication and mention of the grant of the patent: **23.03.2016**
(21) Application number: 13382157.9
(22) Date of filing: 26.04.2013
(51) Int. Cl.: B32B 5/02, B60R 13/02, D03D 25/00

(54) **Trim for automobile vehicle and process for obtaining it**
Verkleidung für Kraftfahrzeug und Verfahren zur Herstellung davon
Garniture pour véhicule automobile et son procédé d'obtention

(43) Date of publication of application: 29.10.2014
(73) Proprietor: Grupo Antolín Ingeniería, S.A., 09007 Burgos (ES)
(72) Inventor: Antolin Fernandez, Adelaida, 09007 BURGOS (ES); Jorro De Inza, Alejandro, 09007 BURGOS (ES); Pérez Rabasa, Pablo, 09007 BURGOS (ES)
(74) Representative: Capitán García, Maria Nuria

(56) References cited:
- US-A- 4 389 447
- US-A1- 2003 077 965

## Description

### TECHNICAL FIELD OF THE INVENTION

The present invention relates to a trim for automobile vehicle.

The invention also relates to a process for manufacturing said trim for automobile vehicle.

### OBJECT OF THE INVENTION

Trims for automobile vehicles are components meant to conceal a part of the vehicle with a mainly aesthetic function.

Said trims comprise a substrate formed by one or two layers with a mainly structural function, namely supporting the loads specific to its function during handling and then during its lifetime after it is mounted in the vehicle, and a decorative layer that provides an aesthetic finish. Said layers are normally shaped by thermoforming processes, that is, processes based on applying heat and pressure to obtain a specific shape.

The different layers comprising the trim must have a certain flexibility to allow shaping them in the shape of the trim to be obtained, without damaging them in the process.

In addition, the trim obtained after shaping the different layers of its structure must be sufficiently rigid to maintain its shape as defined and stable, and to be self-supporting, that is, to support its own weight and the typical loads applied during the handling operations in transport and mounting.

For this reason, it is considered that the trim must fulfil a structural function provided directly by the substrate that forms said trim.

In addition, said trim must be sufficiently flexible to recover in case of potential common deformations during handling or in its lifetime.

Therefore, the main problem to solve is finding an equilibrium point in which the trim structure allows maintaining a defined and stable shape that supports its own weight, and is sufficiently flexible to allow recovery in case of potential deformations commonly occurring in its handling, transport, mounting or lifetime, without damaging said trim.

It is also desirable to attain these two goals by defining a simplified trim structure that allows simplifying the process for obtaining it by reducing the number of operations and components compared to other known trims, as well as keeping its weight low.

It is further desirable for the structure of said trim to favour the integration of elements providing other functions in addition to those common in trims.

### BACKGROUND OF THE INVENTION

As mentioned above, the trims comprise a substrate with a mainly structural function, and a decorative layer that provides an aesthetic finish to the assembly, wherein said substrate and decorative layer are normally shaped by applying heat and pressure.

Said trims must fulfil some basic minimum functions; specifically, they must be rigid enough to maintain a defined and stable shape, and to be self-supporting, as well as sufficiently flexible to allow recovery in case of deformations produced in their handling during transport, mounting and their lifetime.

In the specific case of internal headliners, their structure is based on the use of complex substrates generally obtained by superposing different layers, such as foams, reinforcement fibres and resins, wherein said resins can be used to join the remaining components, provide rigidity to the internal headliner, etc.

These structures obtained by superposition of several elements are complex and costly. Similarly, the processes used to obtain them are also complex, hard to control, and often require a large number of operations.

In addition, the forms used to make the support that forms the internal headliner generally experience problems during forming, particularly in areas where the geometry is more complex, where greater stretching and thickness reductions will occur during the trim forming.

In these cases, during the shaping process the foam is subjected to loads and deformations that can cause it to break, leading to defects in the trim.

For this reason, the use is desirable of flexible components that allow adaptation to complex shapes without losing their properties and maintaining a good appearance after forming.

In addition, to achieve the necessary rigidity levels the manufacturing techniques for internal headliners based on the use of foams generally require using additional reinforcement elements, such as glass fibers, which in addition to increasing the cost and weight of the product lead to health problems in the manufacturing plants.

The applicant's patents EP1878568, ES2157725 disclose trims with the features described above.

On another hand, the use is known of three-dimensional fabrics with a low thickness in the field of automobile vehicle trims with a decorative lining function and not being self-supporting, similarly to other common trims and with similar thickness.

These three-dimensional fabrics, in addition to providing a decorative function, provide a pleasant touch consisting of a smooth and padded feel.

An example of a patent using three-dimensional fabrics with a decorative function and a padded feel is JP2009262407.

It is known laminates which comprise three-dimensional fabrics fully impregnated with resin which maintain a stable three dimensional shape over the time while supporting its own weight but they are not sufficiently flexible to have recovery capabilities in case of potential deformations commonly occurring in its handling, transport, mounting or lifetime, without damaging. Some examples showing this kind of structure are disclosed in the patents US4 US2003077965.

Therefore, in view of the foregoing, the invention relates to a trim for automobile vehicles, as well as their manufacturing process, the structure of which also allows obtaining a defined shape that remains stable over time, wherein said trim can support its own weight and is sufficiently flexible to recover after deformations resulting from handling during transport, mounting, and lifetime, without being damaged.

According to the invention, all of this is achieved by defining a simple trim structure that allows simplifying its manufacturing process by reducing the number of operations and components compared to known trims, as well as keeping its weight low.

### DESCRIPTION OF THE INVENTION

The present invention therefore relates to an automobile vehicle trim that comprises:
a) A substrate formed by:
   i.a three-dimensional fabric comprising:
      - a first layer of knit fabric,
      - a second layer of knit fabric, and
      - an intermediate layer formed by yarn connecting said first and second layers,
      wherein the first layer and second layer comprise polymeric fabrics and the intermediate layer comprises polymeric yarn,
   ii. and a solid resin that maintain the shape of said three-dimensional fabric, according to the shape of the trim,
b) a superficial decorative layer,
   wherein said trim has a defined, three-dimensional and non-flat shape, and is self-supporting, due to its structure, according to which:
   - the solid resin connects each yarn of the intermediate layer with a nearby yarn forming junction bridges that maintain the separation between said yarns and their relative position,
   - and at least one of either the first layer and the second layer is in contact with the solid resin.

The term 'trim' refers to components meant to conceal parts of the vehicle, such as headliners or parts of headliners, door trim or door trim parts, instrument panel trim parts, pillar trim, back and side seat trim, trunk trim or trunk trim parts, engine compartment trim, or wheel well trim.

'Self-supporting' when used with respect to a trim implies that the trim can support its own weight during handling operations without being deformed, such as during transport and mounting and in its lifetime, thereby simplifying said handling operations.

The resin must be understood as any material distributed in the interior of the three-dimensional fabric, either because it is a constituent part thereof or because it is added to it, which during the manufacturing process is first in a liquid or softened state and can flow inside the three-dimensional fabric during shaping, and then solidifies so that the yarns of the second intermediate layer are connected to each other by solid portions of resin, and as a result the trim can maintain its final shape, be self-supporting and maintain a certain ability to overcome small deformations elastically without being damaged in its lifetime.

'Polymeric material' refers to both synthetic and natural polymeric materials.

The capability of said three-dimensional fabric to adapt to complex shapes allows obtaining a defined, three-dimensional non-flat shape of the trim, and results from the combination of a three dimensional knitted fabric structure and the selection of a polymeric material for said three-dimensional fabric.

These structural and material characteristics promote the elongation of the three-dimensional fabric and therefore its adaptability to complex shapes according to the shape of the trim.

In addition, the combination of the three-dimensional fabric and the solid resin allows the trim to be sufficiently rigid as to maintain a defined and stable non-flat three-dimensional shape, as well as to be self-supporting.

Moreover, the combination of the three-dimensional fabric and the solid resin of said trim allows the latter to be sufficiently flexible to recover in case of potential deformations occurring during handling in its transport, mounting and lifetime.

Thus, the trim of the invention can reach a point of equilibrium in which its structure is such that it can simultaneously maintain a complex and stable shape while supporting its own weight and is sufficiently flexible to have recovery capabilities.

On another hand, the trim of the invention achieves these two goals by defining a simplified trim structure that allows simplifying its manufacturing process by reducing the number of operations and components compared to known trims, as well as keeping its weight low.

### DESCRIPTION OF THE DRAWINGS

This specification is supplemented with a set of drawings illustrating the preferred embodiment, which are never intended to limit the invention.
Figure 1 represents a schematic sectional view of an embodiment of the trim of the invention formed by a three-dimensional fabric and a superficial decorative layer.
Figure 2 represents an enlarged view of figure 1 showing the junction bridges that connect several yarns of the intermediate layer to each other.
Figure 3 represents a schematic sectional view of the trim in which the superficial decorative layer does not comprise an additional element according.to one embodiment of the invention.
Figure 4 represents a schematic sectional view of the trim comprising integrated components that provide an additional function to the trim, such as lighting, heating or monitoring functions.
Figure 5 represents a schematic sectional view of the trim, wherein the substrate that forms said trim is formed by the superposition of more than two three-dimensional fabrics.
Figure 6 represents a flowchart of the process for obtaining the trim of the invention.

### DETAILED DESCRIPTION OF THE INVENTION

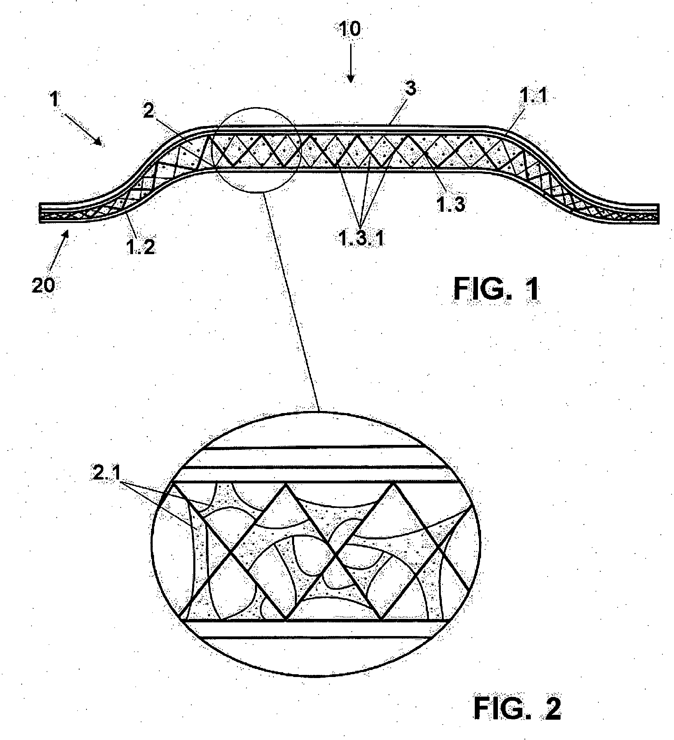

Figure 1 shows a schematic sectional view of the automobile vehicle trim (10) comprising a substrate (20) that in turn is formed by a three-dimensional fabric (1) and a solid resin (2), and a superficial decorative layer (3).

As shown in figure 1, the three-dimensional fabric (1) that forms the substrate (20) comprises:
- a first layer (1.1) of knit fabric,
- a second layer (1.2) of knit fabric, and
- an intermediate layer (1.3) formed by yarns (1.3.1) connecting said first and second layers (1.1), (1.2).

Preferably, said three-dimensional fabric (1) is a three-dimensional double needle bed fabric.

The knitting types of the first and second layers can be the same or different; they can be waft, warp or circular knit, as well as combinations thereof.

The yarns (1.3.1) that form the intermediate layer (1.3) preferably comprise flexible monofilaments.

An important advantage of flexible monofilament yarn is its tendency to recover its shape after the force exerted on its ceases. This makes the three-dimensional fabric (1) behave elastically.

In this way, when the three-dimensional fabric (1) comprising flexible monofilament yarns (1.3.1) is compressed by a shaping mould, it tends to occupy all of the available space, pushing the first and second layers against the walls of the mould cavity.

In this way, the three-dimensional fabric (1) is able to perfectly copy the shape defined by the cavity of said mould.

In addition, the intermediate layer (1.3) can comprise another type of yarns (1.3.1) combined with the flexible monofilament yarns, in order to provide additional functionalities to the trim or to improve its manufacturing process.

Said yarns, for example, can be conduct electricity to provide electrical properties to the three-dimensional fabric (1), consist of optic fibres or other type of fibres providing lighting function, or be multifilament yarns that can improve the impregnation of the three-dimensional fabric (1) with the resin (2).

On another hand, the monofilament yarns can be covered by another type of yarns so that each yarn (1.3.1) provides a two-fold functionality.

Similarly, the yarns (1.3.1) of the intermediate layer (1.3) can be covered or combined with other yarns of a different material than that forming their core, in order to provide additional properties to said yarns.

Both the first layer (1.1) and the second layer (1.2) comprise polymeric fabrics that can be natural in origin, such as cellulosic or proteic, or synthetic, such as polyester, polyamide or polypropylene.

Similarly, the intermediate layer (1.3) comprises polymeric yarns (1.3.1) that can be natural in origin, such as cellulosic or proteic, or synthetic, such as polyester, polyamide or polypropylene.

The substrate (20) that forms the structure of the trim (10) in addition to the three-dimensional fabric (1) described above, comprises a solid resin (2) that maintains the shape of said three-dimensional fabric (1) according to the shape of the trim (10).

Additionally, said solid resin (2) allows the three-dimensional fabric (1) to be flexible enough to allow the trim (10) to be handled, admitting certain deformation without losing the connection between the yarns (1.3.1) that make up the intermediate layer (1.3).

Said solid resin (2) is preferably a polyester-based polyurethane resin, although it can also be selected from the group of polyether-based polyurethane resins, phenolic resins, furanic resins and epoxy resins.

In addition, said solid resin (2) can incorporate additives in order to improve the acoustic properties, rigidity, emissions or flammability, for example, of the resin.

Preferably, the structure of the solid resin (2) comprises open or closed cells, that is, the structure is preferably a foam.

This configuration of the solid resin (2) as a foam is particularly advantageous, as it allows ensuring that said solid resin (2) fills the space between the first layer (1.1) and the second layer (1.2).

In addition to the substrate (20), the components of which have been described above, the trim (1) comprises a superficial decorative layer (3) mainly meant to add an aesthetic finish to the trim (10).

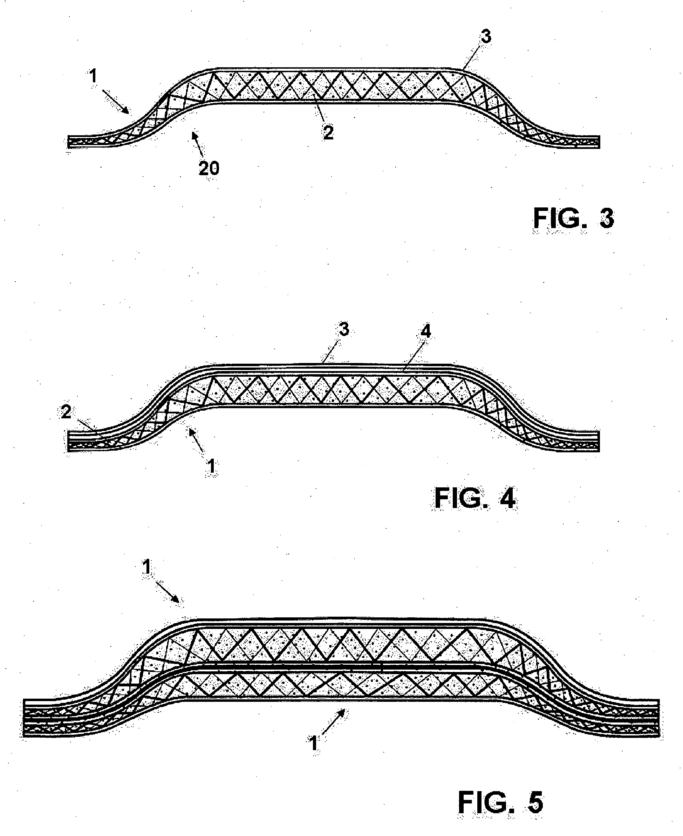

Said superficial decorative layer (3), as shown in figure 3, can be configured without requiring elements in addition to those already in place, that is, those that form the substrate (20). Therefore, in this case the substrate (20) itself provides a good decorative finish, or as shown in figure 1 one can be obtained by adding elements that improve the appearance of said substrate (20).

These additional elements can comprise from laminar elements such as films, woven or non-woven fabrics or leather, or coatings such as paint, varnish, flock, etc.

To improve or change the appearance and/or texture of the different types of superficial decorative layer (3) described above, the invention considers the possibility of performing physical and/or chemical treatments of said superficial decorative layer (3), such as laser engraving, raising, water repellent treatment, fire retardant treatment and others.

With the above-described components and their associated features, the trim (10) of the invention will have a defined, non-flat three-dimensional shape and be self-supporting as a result of its structure, according to which:
- the yarns (1.3.1) that form the intermediate layer (1.3) are connected to each other by the solid resin (2), so that said solid resin (2) connects each yarn (1.3.1) to at least one nearby yarn (1.3.1), forming junction bridges (2.1) as shown in figure 2, which maintain the distances and relative position between said yarns (1.3.1), and thereby the three-dimensional shape of the trim (10),
- and at least one of either the first layer (1.1) and the second layer (1.2) is in contact with the solid resin (2).

Optionally, the support (20) that forms the structure of the trim (10) can be formed by a mutilayer structure, as can be seen in figure 5, which shows an example in which the support (20) is formed by two superimposed three-dimensional fabrics (1).

Therefore, it is possible to have several three-dimensional fabrics (1) or a single three-dimensional fabric (1) folded on itself.

In this way, it is possible to modify the mechanical behaviour of the substrate (20) by superimposing said three-dimensional fabrics (1) in different directions.

On another hand, the trim (10) of the invention can incorporate functional elements (4) in its structure, as shown in figure 4, in order to provide additional functions for said trim (10).

Said additional functions can be, for example, heating, lighting, monitoring and/or any type of electrification.

The functional elements (4) associated to the aforementioned functions can comprise, for example:
- laminar elements incorporated between the layers that form the trim (10),
- knit yarns forming part of any one of the three layers (1.1, 1.2, 1.3) that form the three-dimensional fabric (1), that is, the yarns incorporated in the manufacturing process of said three-dimensional fabric (1),
- yarns embroidered on some of the layers (1.1, 1.2), after completing the manufacture of the three-dimensional fabric (1),
- materials applied either on some of the layers (1.1, 1.2, 1.3) or on the yarns that form said layers (1.1, 1.2, 1.3), or
- the combination of the aforementioned techniques.

In addition, the functional elements (4) in the trim (10) can comprise additional components of different type, such as connectors, lighting sources, etc.

The invention also relates to a process for obtaining a trim (10) with the features described above.

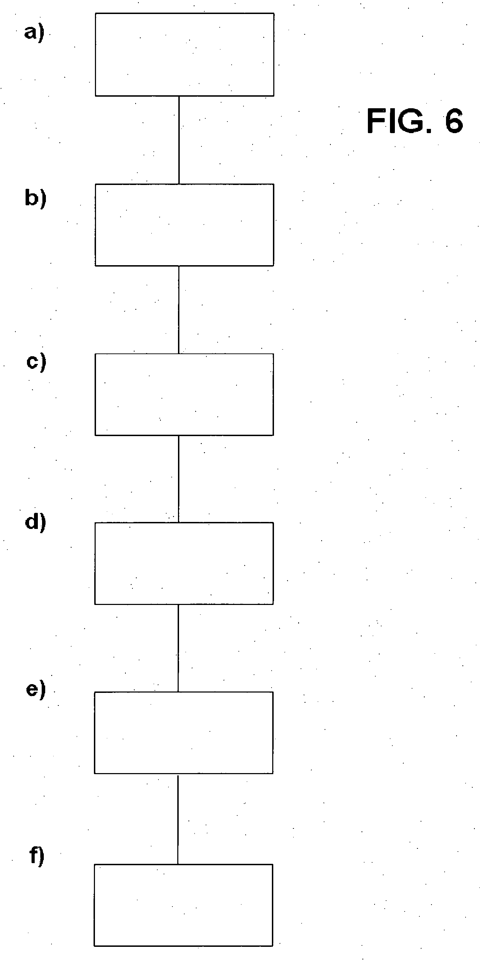

Figure 6 shows a flowchart with the different stages that comprise the manufacturing process.

This manufacturing process starts with stage a) manufacturing the three-dimensional fabric (1) by placing:
- a first layer (1.1) of knit fabric,
- a second layer (1.2) of knit fabric, and
- an intermediate layer (1.3) formed by yarns (1.3.1) connecting said first and second layers (1.1), (1.2).

Preferably, said three-dimensional fabric is a double needle bed fabric, that is, it is knitted forming a single part, for example in a Raschel machine.

In addition, the three-dimensional fabric (1) can be formed by a multi-layer structure.

For this purpose, several three-dimensional fabrics (1) may be superimposed, or a single three-dimensional fabric (1) folded on itself.

Stage b) of the process comprises introducing a resin inside it.

Both the method and the time of application of the resin (2) depend on its characteristics and state, liquid or solid, at the time of application. If the resin (2) is in liquid state, said resin (2) can be applied by spraying, with rollers, padding, transfer or lamination.

As regards the application areas, in this case in which the resin (2) is in liquid state, it can be applied on one face, through the first layer (1.1) or through the second layer (1.2), or through both faces of the three-dimensional fabric (1).

In this case the resin (2) is generally applied after stage a) for obtaining the three-dimensional fabric (1).

If the resin (2) is in solid state, said resin (2) can be applied by introducing it in the three-dimensional fabric in powder form in the open spaces of said three-dimensional fabric (1).

In this case the resin (2) is generally applied after stage a) for obtaining the three-dimensional fabric (1).

An alternative form of introducing the resin (2) in the three-dimensional fabric (1) when said resin (2) is in solid state is to incorporate it in the composition of the fibers that make up the three-dimensional fabric (1) or only some of its layers (1.1, 1.2, 1.3).

In this case, when the resin (2) is incorporated in the composition of some of the fibers that make up part of any of the layers (1.1, 1.2, 1.3) of the three-dimensional fabric (1), it can represent 100% of its composition or only part thereof, so that incorporation of the resin (2) is performed during the stage a) for manufacturing the three-dimensional fabric (1).

After introducing the resin (2), stage c) of the process is performed, consisting of activating the resin.

The effect of activating this resin (2) is to modify its physical or chemical state, depending on the thermoplastic or thermosetting nature of the resin (2), such that said resin (2) can flow and distribute itself between the yarns (1.3.1) that form the intermediate layer (1.3) of the three-dimensional fabric (1) when pressure is applied on the three-dimensional fabric (1) in a subsequent shaping stage.

This activation is performed in order to form the junction bridges (2.1) between said yarns (11.3.1), which allow maintaining the separation between them and their relative position, and therefore the three-dimensional shape of the trim (10).

Depending on the nature of the resin (2), activation is performed before the shaping stage d) the three-dimensional fabric (1) with the resin (2) or during said stage d).

If the resin (2) is thermoplastic resin, activation involves applying heat to the three-dimensional fabric (1) until said resin (2) fuses, which is performed before stage d).

After the junction bridges (2.1) are formed, the resin (2) cools and solidifies, consolidating the junction bridges (2.1) formed in the shaping stage d) the three-dimensional fabric (1) together with the resin (2).

If the resin (2) is thermosetting resin, activation involves applying heat to the three-dimensional fabric (1) until a chemical reaction starts in said resin (2), which is performed during stage d).

Said chemical reaction modifies the composition of the resin (2), resulting on its completion in a solid resin (2) that will form the junction bridges (2.1).

Optionally, if the resin (2) is thermosetting a catalyst can be used to control the chemical reaction occurring in the shaping stage d).

On another hand, the number and size of the junction bridges (2.1) formed by said resin once it solidifies can cause their interconnection, resulting in a foam structure.

This type of foam formed by interconnected junction bridges (2.1) can be obtained by foaming the resin (2) either before or during the shaping stage d).

The process of the invention further comprises, as stated above, a the shaping stage d) the three-dimensional fabric (1) with the resin (2) by applying pressure to obtain a shaped panel.

Optionally, the shaping can be performed by the simultaneous application of pressure and heat.

In this stage the three-dimensional fabric (1) with the resin (2) is forced to copy the shape of the mold in which the shaping is performed by applying pressure.

Firstly, due to the application of pressure and, optionally, the simultaneous application of heat, the resin (2) flows to form the junction bridges (2.1) between the yarns (1.3.1) that form the intermediate layer (1.3) and, secondly, after some time said junction bridges (2.1) are consolidated with the solidification of the resin (2), either because the chemical reaction ends if the resin (2) is thermosetting, or because the resin (2) has cooled enough if it is thermoplastic.

The result of this is the consolidation of the trim and the stabilisation of the final shape of the trim (10) at the end of stage d).

Therefore, the shaping stage d) can be performed with a cold mould, that is, the three-dimensional fabric (1) and the resin (2) are subjected to pressure only inside said mould, or in a hot mould, that is, a mould where in addition to pressure, heat is applied to the three-dimensional fabric (1) and the resin (2).

In the latter case, in which the shaping is performed in a mould with simultaneous application of heat and pressure, a catalyst can be used before introducing the three-dimensional fabric (1) with the resin in the mould, in order to control the chemical reaction.

Another stage performed in the process of the invention is stage e), for creating a superficial decorative layer (3).

Said superficial decorative layer (3) can be formed by using additional elements or without any elements in addition to those that form the substrate (20).

In the specific case in which no additional elements are included, the three-dimensional fabric (1) and the solid resin (2), after the shaping has taken place, presents suitable finishing features. In this way, it is not necessary to add any more elements to fulfil the decorative function of the trim (10).

If this is not the case, and it is necessary to add elements to provide said decorative function, said elements can be shaped together with the three-dimensional fabric (1) in combination with the resin (2), or added after the shaping stage d) has finished.

The additional elements that act as a superficial decorative layer (3) can be laminar, such as woven and non-woven fabrics, films, leather, etc., and can be added during stage d) so that the substrate (20) is clad at the same time as it is shaped, or after stage d), so that said support (20) is first shaped and then clad in a later stage.

Moreover, the additional elements acting as the superficial decorative layer (3) can be a coating, such as a paint, varnish or flock, so that they are normally applied after the shaping stage d) of the support (20), but it is also possible to apply them inside the mold during stage d).

Additionally, in order to improve or change the superficial decorative layer (3), said layer (3) can be subjected to a subsequent physical and/or chemical treatment, such as laser engraving, raising, water repellent treatment, etc., changing some of the surface properties and the appearance of the trim (10).

Finally, in order to complete the process of the invention, a stage f) is performed in which the shaped panel is cut to obtain a trim (10).

The result of said stage f) is a shaped panel with the dimensions and orifices required to complete the process for obtaining the trim (10).

The cutting stage f) can be performed simultaneously to the shaping stage d) for the three-dimensional fabric (1) with the resin (2), where the superficial decorative layer (3) can also be present.

In addition, said stage f) can also be performed after the shaping stage d) of the three-dimensional fabric with the resin (2).

Furthermore, the process of the invention can optionally include a stage for integrating functions in the trim (10), such as lighting, heating, monitoring or electrification, by incorporating functional elements (4) during said process.

Firstly, said incorporation of functions can be performed in stage a) for manufacturing the three-dimensional fabric (1), forming part thereof, so that the functional elements (4) form part of the yarns (1.3.1) of the intermediate layer (1.3) and/or the layers (1.1, 1.2) of the three-dimensional fabric (1).

On another hand, the added elements can be components such as connectors, LEDs, etc. incorporated during the manufacture of the three-dimensional fabric (1) so that they form part thereof.

This incorporation can also be performed in the shaping stage d) of the three-dimensional fabric with the resin (2). Preferably in this case, the functional elements can be laminar elements superimposed on the three-dimensional fabric (1) with the resin (2), such as heating sheets, flat wiring, sensors, etc.

## Claims

1. Trim for automobile vehicle comprising:
a) A substrate (20) formed by:
i. a three-dimensional fabric (1) comprising:
- a first layer (1.1) of knit fabric,
- a second layer (1.2) of knit fabric (1.2.1), and
- an intermediate layer (1.3) formed by yarns connecting said first and second layers, wherein the first layer (1.1) and the second layer (1.2) comprise polymeric fabrics and the intermediate layer (1.3) comprises polymeric yarns (1.3.1),
ii. and a solid resin (2) that maintains the shape of said three-dimensional knit fabric (1), according to the shape of the trim (10),
b) a superficial decorative layer (3),
wherein said trim (10) has a defined, three-dimensional and non-flat shape, and is self-supporting, due to its structure according to which:
- the solid resin connects each yarn (1.3.1) of the intermediate layer (1.3) with a nearby yarn (1.3.1) forming junction bridges (2.1) that maintain the separation between said yarns and their relative position,
- and at least one of either the first layer (1.1) and the second layer (1.2) is in contact with the solid resin (2).

2. Trim for automobile vehicle according to claim 1, wherein the three-dimensional fabric (1) is a three-dimensional double needle bed knit fabric.

3. Trim for automobile vehicle according to claim 1, wherein the polymeric fabrics are of natural or synthetic origin.

4. Trim for automobile vehicle according to.claim 1, wherein the first layer (1.1) is made of weft or warp knit fabric and the second layer (1.2) is made of weft or warp knit fabric.

5. Trim for automobile vehicle according to claim 1, wherein the first layer (1.1) and/or the second layer (1.2) is made of circular knit fabric.

6. Trim for automobile vehicle according to claim 1, wherein the yarns (1.3.1) that form the intermediate layer (1.3) are monofilament yarns.

7. Trim for automobile vehicle according to claim 1, wherein the polymeric yarns (1.3.1) are of natural or synthetic origin.

8. Trim for automobile vehicle according to claim 1, wherein the intermediate layer comprises several types of yarns (1.3.1).

9. Trim for automobile vehicle according to claim 1, wherein the solid resin (2) has a foam structure.

10. Trim for automobile vehicle according to claim 1, wherein the solid resin (2) is thermosetting.

11. Trim for automobile vehicle according to claim 1, wherein the solid resin (2) is polyester based polyurethane.

12. Trim for automobile vehicle according to claim 1, wherein the superficial decorative layer (3) is configured without any additional elements with respect to the three-dimensional fabric (1) and the solid resin (2).

13. Trim for automobile vehicle according to claim 1, wherein the superficial decorative layer (3) is configured with additional elements with respect to the three-dimensional fabric (1) and the solid resin (2).

14. Trim for automobile vehicle according to claims 12 or 13, wherein the superficial decorative layer (3) is laser engraved.

15. Process for manufacturing a trim for automobile vehicle, **characterised in that** it comprises the following stages:
a.Manufacturing a three-dimensional fabric by arranging:
i. a first layer (1.1) of knit fabric,
ii. a second layer (1.2) of knit fabric, and
iii. an intermediate layer (1.3) formed by yarns (1.3.1) connecting said first and second layers (1.1, 1.2),
wherein the first layer (1.1) and the second layer (1.2) comprise polymeric fabrics and the intermediate layer (1.3) comprises polymeric yarns (1.3.1),
b.introducing a resin in the three-dimensional fabric (1),
c.activating the resin by modifying its physical or chemical state by applying heat to the three-dimensional fabric (1) in order to the resin can flow and distribute itself between the yarns (1.3.1) that form the intermediate layer (1.3) of the three-dimensional fabric (1) when pressure is applied on the three-dimensional fabric (1) in a subsequent shaping stage,
d.shaping the three-dimensional fabric with the resin for obtaining a shaped panel firstly by applying pressure in order to the resin (2) flows to form junction bridges (2.1) between the yarns (1.3.1) that form the intermediate layer (1.3), and secondly after some time said junction bridges (2.1) are consolidated with the solidification of the resin (2) where said junction bridges (2.1) are formed by solid resin connection of each yarn (1.3.1) of the intermediate layer with a nearby yarn (1.3.1), and in order at least one of the either the first layer (1.1) and the second layer (1.2) is in contact with the solid resin (2),
e.creating a superficial decorative layer
f.cutting the shaped panel to obtain a trim (10) for automobile vehicle which comprises:
a) a substrate (20) formed by:
i. a three-dimensional fabric (1) comprising:
- a first layer (1.1) of knit fabric,
- a second layer (1.2) of knit fabric (1.2.1) and
- an intermediate layer (1.3) formed by yarns connecting said first and second layers,
wherein the first layer (1.1) and the second layer (1.2) comprise polymeric fabrics and the intermediate layer (1.3) comprises polymeric yarns (1.3.1),
ii. and a solid resin (2) that maintains the shape of said three-dimensional knit fabric (1), according to the shape of the trim (10),
b) a superficial decorative layer (3), wherein said trim (10) has a defined, three-dimensional and non-flat shape, and is self-supporting, due to its structure according to which:
- the solid resin connects each yarn (1.3.1) of the intermediate layer (1.3) with a nearby yarn (1.3.1) forming junction bridges (2.1) that maintain the separation between said yarns and their relative position,
- and at least one of either the first layer (1.1) and the second layer (1.2) is in contact with the solid resin (2).

## Patentansprüche

1. Verkleidung für Automobil mit
a) einem Trägermaterial(20) aus folgenden Komponenten:
i. ein dreidimensionales Gewebe (1), das Folgendes umfasst:
- eine erste Schicht (1.1) aus Strickgewebe,
- eine zweite Schicht (1.2) aus Strickgewebe (1.2.1) und
- eine Zwischenschicht (1.3) aus Garnen, welche die erste und die zweite Schicht miteinander verbindet, wobei die erste (1.1) und die zweite Schicht (1.2) Polymergewebe umfassen und die Zwischenschicht (1.3) einen Polymergarn (1.3.1) besitzt,
ii. ein festes Harz (2), das die Form des besagten dreidimensionalen Strickgewebes (1) gemäß der Form der Verkleidung (10) aufrechterhält;
b) einer dekorativen Oberflächenschicht (3),
wobei die genannte Verkleidung (10) eine bestimmte dreidimensionale, nicht flache Form aufweist und sich aufgrund ihrer wie folgt aufgebauten Struktur selbst stützt:
- Das feste Harz (1.3.1) verbindet jeden Garn der Zwischenschicht (1.3) mit einem nahegelegenen anderen Garn (1.3.1) und bildet auf diese Weise verbindende Brücken (2.1), welche die Abstände zwischen den genannten Garnen in ihren Positionen zueinander aufrechterhalten;
- mindestens eine der beiden Schichten - die erste (1.1) oder die zweite (1.2) Schicht - steht in Kontakt mit dem festen Harz (2).

2. Verkleidung für Automobil gemäß Anspruch 1, wobei das dreidimensionale Gewebe (1) ein Gewebe mit doppeltem Nadelbett ist.

3. Verkleidung für Automobil gemäß Anspruch 1, wobei die Polymergewebe natürlichen oder synthetischen Ursprungs sind.

4. Verkleidung für Automobil gemäß Anspruch 1, wobei sowohl die erste (1.1) als auch die zweite Schicht (1.2) aus Geweben mit Schussfaden oder Trikotbindung gefertigt sind.

5. Verkleidung für Automobil gemäß Anspruch 1, wobei die erste Schicht (1.1) und/oder die zweite Schicht (1.2) aus Rundstrickgewebe gefertigt sind.

6. Verkleidung für Automobil gemäß Anspruch 1, wobei die Garne (1.3.1), welche die Zwischenschicht (1.3) bilden, Monofilgarne sind.

7. Verkleidung für Automobil gemäß Anspruch 1, wobei die Polymergarne (1.3.1) natürlichen oder synthetischen Ursprungs sind.

8. Verkleidung für Automobil gemäß Anspruch 1, wobei die Zwischenschicht (1.3.1) aus mehreren unterschiedlichen Garnen besteht.

9. Verkleidung für Automobil gemäß Anspruch 1, wobei das feste Harz (2) eine Schaumstruktur besitzt.

10. Verkleidung für Automobil gemäß Anspruch 1, wobei das feste Harz (2) wärmehärtend ist.

11. Verkleidung für Automobil gemäß Anspruch 1, wobei das feste Harz (2) aus Polyurethan auf Polyesterbasis besteht.

12. Verkleidung für Automobil gemäß Anspruch 1, wobei die dekorative Oberflächenschicht (3) neben dem dreidimensionalen Gewebe (1) und dem festen Harz (2) keine zusätzlichen Elemente umfasst.

13. Verkleidung für Automobil gemäß Anspruch 1, wobei die dekorative Oberflächenschicht (3) neben dem dreidimensionalen Gewebe (1) und dem festen Harz (2) sehr wohl zusätzliche Elemente umfasst.

14. Verkleidung für Automobil gemäß Anspruch 12 oder 13, wobei die dekorative Oberflächenschicht (3) lasergraviert ist.

15. Herstellungsverfahren einer Verkleidung für Automobil, **gekennzeichnet durch** folgende Verfahrensabschnitte:
a. Herstellung des dreidimensionalen Gewebes in folgender Anordnung:
i. eine erste Schicht (1.1) aus Strickgewebe,
ii. eine zweite Schicht (1.2) aus Strickgewebe und
iii. eine Zwischenschicht (1.3) aus Garnen (1.3.1), welche die genannte erste und zweite Schicht (1.1, 1.2) miteinander verbindet,
wobei die erste (1.1) und die zweite Schicht (1.2) Polymergewebe umfassen und die Zwischenschicht (1.3) einen Polymergarn (1.3.1) besitzt,
b. Einfügen eines Harzes in das dreidimensionale Gewebe (1),
c. Aktivieren des Harzes mittels Veränderung seines physikalischen oder chemischen Zustands **durch** Wärmeeinwirkung am dreidimensionalen Gewebe (1); somit fließt das Harz und verteilt sich zwischen den Garnen (1.3.1), welche die Zwischenschicht (1.3) des dreidimensionalen Gewebes (1) bilden, sobald in einer nachfolgenden Formungsphase ein Druck auf das besagte Gewebe (1) einwirkt,
d. Formung des dreidimensionalen Gewebes mit dem Harz, um eine geformte Platte zu erhalten, zuerst **durch** Druckeinwirkung auf das Harz (2), damit es fließt und Verbindungsbrücken (2.1) zwischen den Garnen (1.3.1) herstellt, welche die Zwischenschicht (1.3) bilden, und zweitens verfestigen sich die genannten Verbindungsbrücken (2.1) nach einiger Zeit **durch** das Aushärten des Harzes (2), wobei feste Harzverbindungen sämtlicher Garne (1.3.1) der Zwischenschicht diese Verbindungsbrücken (2.1) zu jeweils nahe gelegenen Garnen (1.3.1) herstellen und wobei mindestens eine der beiden Schichten - die erste oder die zweite Schicht - in Kontakt mit dem festen Harz (2) steht,
e. Herstellung einer dekorativen Oberflächenschicht,
f. Zurechtschneiden der geformten Platte, um eine Verkleidung (10) für ein Automobil zu erhalten, die folgende Elemente umfasst:
a) ein Trägermaterial(20), bestehend aus:
i. einem dreidimensionalen Gewebe (1), das Folgendes umfasst:
- eine erste Schicht (1.1) aus Strickgewebe,
- eine zweite Schicht (1.2) aus Strickgewebe (1.2.1) und
- eine Zwischenschicht (1.3) aus Garn, welche die erste und die zweite Schicht miteinander verbindet,
wobei die erste (1.1) und die zweite Schicht (1.2) Polymergewebe umfassen und die Zwischenschicht (1.3) einen Polymergarn (1.3.1) besitzt,
ii. ein festes Harz (2), das die Form des besagten dreidimensionalen Strickgewebes (1) gemäß der Form der Verkleidung (10) aufrechterhält,
b) eine dekorative Oberflächenschicht (3),
wobei die genannte Verkleidung (10) eine bestimmte dreidimensionale, nicht flache Form aufweist und sich aufgrund ihrer wie folgt aufgebauten Struktur selbst stützt:
- Das feste Harz (1.3.1) verbindet jeden Garn der Zwischenschicht (1.3) mit einem nahegelegenen anderen Garn (1.3.1) und bildet auf diese Weise verbindende Brücken (2.1), welche die Abstände zwischen den genannten Garnen in ihren Positionen zueinander aufrechterhalten;
- mindestens eine der beiden Schichten - die erste (1.1) oder die zweite (1.2) Schicht - steht in Kontakt mit dem festen Harz (2).

## Revendications

1. Garniture pour véhicule automobile comprenant :
a) un substrat (20) formé par :
i.un tissu en trois dimensions (1) comprenant :
- une première couche (1.1) de tissue tricoté,
- une seconde couche (1.2) de tissue tricoté (1.2.1) et
- une couche intermédiaire (1.3) formée par des fils connectant lesdites première et seconde couches,
dans laquelle la première couche (1.1) et la seconde couche (1.2) sont constituées de tissus polymères et la couche intermédiaire (1.3) est constituée de fils polymères (1.3.1),
ii. et une résine solide (2) qui maintient la forme dudit tissue tricoté en trois dimensions (1), en fonction de la forme de la garniture (10),
b) une couche décorative superficielle (3),
dans laquelle ladite garniture (10) présente une forme définie en trois dimensions non plate et est autoportante en raison de sa structure, selon laquelle :
- la résine solide connecte chaque fil (1.3.1) de la couche intermédiaire (1.3) avec un fil proche (1.3.1), formant des ponts de jonction (2.1) qui maintiennent la séparation entre lesdits fils et leur position relative,
- et au moins une de la première couche (1.1) et de la seconde couche (1.2) est en contact avec la résine solide (2).

2. Garniture pour véhicule automobile selon la revendication 1, dans laquelle le tissu en trois dimensions (1) est un tissu tricoté à double fonture en trois dimensions.

3. Garniture pour véhicule automobile selon la revendication 1, dans laquelle les tissus polymères sont d'origine naturelle ou synthétique.

4. Garniture pour véhicule automobile selon la revendication 1, dans laquelle la première couche (1.1) est composée de tissu tricoté à chaîne ou à trame et la seconde couche (1.2) est composée de tissu tricoté à chaine ou à trame.

5. Garniture pour véhicule automobile selon la revendication 1, dans laquelle la première couche (1.1) et/ou la seconde couche (1.2) sont composées de tissu tricoté circulaire.

6. Garniture pour véhicule automobile selon la revendication 1, dans laquelle les fils (1.3.1) qui forment la couche intermédiaire (1.3) sont des fils à monofilament.

7. Garniture pour véhicule automobile selon la revendication 1, dans laquelle les fils polymères (1.3.1) sont d'origine naturelle ou synthétique.

8. Garniture pour véhicule automobile selon la revendication 1, dans laquelle la couche intermédiaire comprend plusieurs types de fils (1.3.1).

9. Garniture pour véhicule automobile selon la revendication 1, dans laquelle la résine solide (2) présente une structure de mousse.

10. Garniture pour véhicule automobile selon la revendication 1, dans laquelle la résine solide (2) est thermodurcissable.

11. Garniture pour véhicule automobile selon la revendication 1, dans laquelle la résine solide (2) est du polyuréthane à base de polyester.

12. Garniture pour véhicule automobile selon la revendication 1, dans laquelle la couche décorative superficielle (3) est conçue sans élément supplémentaire quelconque par rapport au tissu en trois dimensions (1) et à la résine solide (2).

13. Garniture pour véhicule automobile selon la revendication 1, dans laquelle la couche décorative superficielle (3) est conçue avec des éléments supplémentaires par rapport au tissu en trois dimensions (1) et à la résine solide (2).

14. Garniture pour véhicule automobile selon les revendications 12 ou 13, dans laquelle la couche décorative superficielle (3) est gravée au laser.

15. Procédé de fabrication d'une garniture pour véhicule automobile, **caractérisé en ce qu'**il comprend les étapes suivantes :
a. fabrication d'un tissu en trois dimensions en agençant :
i. une première couche (1.1) de tissu tricoté,
ii. une seconde couche (1.2) de tissue tricoté et
iii. une couche intermédiaire (1.3) formée par des fils (1.3.1) connectant lesdites première et seconde couches (1.1, 1.2),
dans lequel la première couche (1.1) et la seconde couche (1.2) sont constituées de tissus polymères et la couche intermédiaire (1.3) est constituée de fils polymères (1.3.1),
b. introduction d'une résine dans le tissu en trois dimensions (1),
c. activation de la résine par modification de son état physique ou chimique en appliquant de la chaleur au tissu en trois dimensions (1) afin que la résine puisse s'écouler et se répartir entre les fils (1.3.1) qui forment la couche intermédiaire (1.3) du tissu en trois dimensions (1) lorsqu'une pression est appliquée sur le tissu en trois dimensions (1) dans une étape de formation ultérieure,
d. formation du tissu en trois dimensions avec la résine afin d'obtenir un panneau formé tout d'abord en appliquant une pression afin que la résine (2) s'écoule pour former des ponts de jonction (2.1) entre les fils (1.3.1) qui forment la couche intermédiaire (1.3) et ensuite, après un certain temps, lesdits ponts de jonction (2.1) sont consolidés avec la solidification de la résine (2) là où lesdits ponts de jonction (2.1) sont formés par la connexion, par la résine solide, de chaque fil (1.3.1) de la couche intermédiaire avec un fil à côté (1.3.1) et afin qu'au moins une de la première couche (1.1) et de la seconde couche (1.2) soit en contact avec la résine solide (2),
e. création d'une couche décorative superficielle
f. découpage du panneau formé afin d'obtenir une garniture (10) pour véhicule automobile qui comprend :
a) un substrat (20) formé par :
i. un tissu en trois dimensions (1) comprenant :
- une première couche (1.1) de tissu tricoté,
- une seconde couche (1.2) de tissu tricoté (1.2.1) et
- une couche intermédiaire (1.3) formée par des fils connectant lesdites première et seconde couches,
dans lequel la première couche (1.1) et la seconde couche (1.2) sont constituées de tissus polymères et la couche intermédiaire (1.3) est constituée de fils polymères (1.3.1),
ii. et une résine solide (2) qui maintient la forme dudit tissu tricoté en trois dimensions (1), selon la forme de la garniture (10),
b) une couche décorative superficielle (3),
dans lequel ladite garniture (10) présente une forme définie en trois dimensions non plate et est autoportante, en raison de sa structure selon laquelle :
- la résine solide connecte chaque fil (1.3.1) de la couche intermédiaire (1.3) avec un fil à côté (1.3.1), formant des ponts de jonction (2.1) qui maintiennent la séparation entre lesdits fils et leur position relative,
- et au moins une de la première couche (1.1) et de la seconde couche (1.2) est en contact avec la résine solide (2).
